# EUROPEAN PATENT APPLICATION

(11) **EP 1 468 607 A2**
(43) Date of publication of application: **20.10.2004**
(21) Application number: 04251964.5
(22) Date of filing: 01.04.2004
(51) Int. Cl.: A01N 43/70

(54) **Microbicidal composition**

(30) Priority: 07.04.2003 US 460923 P
(71) Applicant: ROHM AND HAAS COMPANY, Philadelphia, Pennsylvania 19106-2399 (US)
(72) Inventor: Heer, Beat, Grabs 9472 (CH); Tiedtke, Gerhard, Gams 9473 (CH); Hegarty, Bryan Martin, Peymeinade 06530 (FR)
(74) Representative: Kent, Venetia Katherine

(57) **Abstract**

A microbicidal composition containing: (a) at least one sulfur-containing s-triazine; and (b) at least one pyrithione metal salt.

## Description

This invention relates to a combination of selected microbicides.

In some cases, commercial microbicides cannot provide effective control of microorganisms, even at high use concentrations, due to weak activity against certain types of microorganisms, e.g., those resistant to some microbicides. Combinations of different microbicides are sometimes used to provide overall control of microorganisms in a particular end use environment. For example, a combination of a pyrithione salt and zinc oxide is disclosed in U.S. Pat. No. 5,939,203. This reference mentions that any of a variety of co-biocides may be used in conjunction with the pyrithione salt. However, there is a need for additional combinations of microbicides to provide effective control of microorganisms that is both quick and long lasting. One problem addressed by this invention is to provide such additional combinations of microbicides.

Another problem addressed by this invention is to provide additional combinations of microbicides that contain at most low levels of microbicides that are undesirable for toxicological reasons. For example, combination biocides including methyl-N-benzimidazol-2-yl carbamate are known. However, the toxicity of this compound to non-target organisms makes combinations including it in substantial amounts less desirable. Similarly, combinations containing halogenated 3-isothiazolones at high levels are undesirable.

### STATEMENT OF THE INVENTION

The present invention is directed to a microbicidal composition comprising: (a) at least one sulfur-containing s-triazine; and (b) at least one pyrithione compound.

### DETAILED DESCRIPTION OF THE INVENTION

As used herein, the following terms have the designated definitions, unless the context clearly indicates otherwise. The term "microbicide" refers to a compound capable of inhibiting the growth of or controlling the growth of microorganisms at a locus; microbicides include bactericides, fungicides and algaecides. The term "microorganism" includes, for example, fungi (such as yeast and mold), bacteria and algae. The term "locus" refers to an industrial system or product subject to contamination by microorganisms. The following abbreviations are used throughout the specification: ppm = parts per million by weight (weight/weight). Unless otherwise specified, references to percentages (%) are by weight. An "alkyl" group is a hydrocarbyl group having from one to twenty carbon atoms in a linear, branched or cyclic arrangement. An "aryl" group is a substituent derived from an aromatic hydrocarbon compound. An aryl group has a total of from six to twenty ring atoms, and has one or more rings which are separate or fused.

Preferably, the at least one sulfur-containing s-triazine is at least one 2-N-alkyl-4-N-alkyl-6-alkylthio-1,3,5-triazine-2,4-diylamine, i.e., a compound of formula 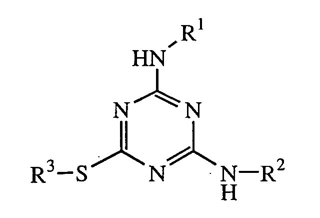 wherein R¹, R² and R³ are alkyl groups. Preferably, R¹, R² and R³ are C₁-C₆ alkyl groups, more preferably C₁-C₄ alkyl groups. In one preferred embodiment, R³ is methyl. In one preferred embodiment, R¹ and R² are C₂-C₄ alkyl groups. In one preferred embodiment, the at least one sulfur-containing s-triazine is selected from the group consisting of 2-N-cyclopropyl-4-N-tert-butyl-6-methylthio-1,3,5-triazine-2,4-diylamine (also known as Cybutryn, available from CIBA Spezialitaeten Chemie AG as Irgarol^{TM} 1071) and 2-N-ethyl-4-N-tert-butyl-6-methylthio-1,3,5-triazine-2,4-diylamine (also known as Terbutryn). Preferably, the microbicidal composition contains at least 1% of the sulfur-containing s-triazine(s), more preferably at least 2%, and most preferably at least 3%. Preferably, the microbicidal composition contains no more than 20% of the sulfur-containing s-triazine(s), more preferably no more than 15%, more preferably no more than 12% and most preferably no more than 10%.

Preferably, the at least one pyrithione compound is at least one pyrithione metal salt. Most preferably, the at least one pyrithione metal salt is zinc pyrithione. Preferably, the microbicidal composition contains at least 5% of the pyrithione compound(s), more preferably at least 8%, more preferably at least 10% and most preferably at least 12%. Preferably, the microbicidal composition contains no more than 45% of the pyrithione compound(s), more preferably no more than 25%, more preferably no more than 20% and most preferably no more than 17%. Optionally, zinc oxide also is included in the microbicidal composition as a stabilizer. Preferably, the amount of zinc oxide is at least 0.5%, more preferably at least 1%, more preferably at least 2% and most preferably at least 5%. Preferably, the amount of zinc oxide is no more than 20%, more preferably no more than 12%, and most preferably no more than 8%.

The microbicidal compositions of the present invention preferably contain no more than 5% of halogenated biocides; that is, zero or up to 5%, preferably zero or up to 3%, more preferably zero or up to 2%, and most preferably zero or up to 1% of halogenated biocides may be present. Microbicidal compositions dependent on the presence of halogenated biocides are susceptible to chemical degradation and may require additional stabilizer components, such as metal salt stabilizers; salt stabilizers sometimes create unacceptable properties in finished formulations. For this reason it is desirable to provide microbicide formulations substantially free of halogenated biocides, but that still provide the degree of antimicrobial protection provided by the halogenated biocides, such as the microbicidal compositions of the present invention. Preferably, the microbicidal compositions of the present invention are substantially free of methyl-N-benzimidazol-2-yl carbamate, i.e., they contain less than 0.5%, more preferably less than 0.3%, and most preferably less than 0.1%.

The microbicidal composition of this invention optionally contains other biocidal active ingredients in addition to the ones described specifically in this application.

The component microbicides may be used in the mixtures of the present invention "as is" or may first be formulated with a solvent or a solid carrier. Suitable solvents include, for example, water; glycols, such as ethylene glycol, propylene glycol, diethylene glycol, dipropylene glycol, polyethylene glycol, and polypropylene glycol; glycol ethers; alcohols, such as methanol, ethanol, propanol, phenethyl alcohol and phenoxypropanol; ketones, such as acetone and methyl ethyl ketone; esters, such as ethyl acetate, butyl acetate, triacetyl citrate, and glycerol triacetate; carbonates, such as propylene carbonate and dimethyl carbonate; and mixtures thereof. It is preferred that the solvent is selected from water, glycols, glycol ethers, esters and mixtures thereof. Suitable solid carriers include, for example, cyclodextrin, silicas, diatomaceous earth, waxes, cellulosic materials and charcoal. It is preferred that the microbicides are formulated in water.

When a microbicide component having low water solubility is formulated in a solvent, the formulation may optionally contain surfactants. When such formulations contain surfactants, they are generally in the form of emulsifiable concentrates, emulsions, microemulsifiable concentrates, or microemulsions. Emulsifiable concentrates form emulsions upon the addition of a sufficient amount of water. Microemulsifiable concentrates form microemulsions upon the addition of a sufficient amount of water. Such emulsifiable and microemulsifiable concentrates are generally well known in the art; it is preferred that such formulations are free of surfactants. U.S. Patent No. 5,444,078 may be consulted for further general and specific details on the preparation of various microemulsions and microemulsifiable concentrates.

A microbicide component having low water solubility also can be formulated in the form of a dispersion. The solvent component of the dispersion can be an organic solvent or water, preferably water. Such dispersions can contain adjuvants, for example, co-solvents, thickeners, anti-freeze agents, dispersants, fillers, pigments, surfactants, stabilizers, scale inhibitors and anti-corrosion additives.

Any formulation of any component microbicide may be used with any formulation of another component microbicide in the mixtures of the present invention. When more than one microbicide component is first formulated with a solvent, the solvent used for each microbicide may be the same as or different from the solvent used to formulate the other commercial microbicides. It is preferred that the solvents are miscible. In the alternative, the microbicides may be combined directly and then a solvent added to the mixture.

Those skilled in the art will recognize that the microbicide components of the present invention may be added to a locus sequentially, simultaneously, or may be combined before being added to the locus. It is preferred that the microbicide components be added to a locus simultaneously or combined prior to being added to the locus. When the microbicides are combined prior to being added to a locus, such combination may optionally contain adjuvants, such as, for example, solvent, thickeners, anti-freeze agents, colorants, sequestrants (such as ethylenediamine-tetraacetic acid, ethylenediaminedisuccinic acid, iminodisuccinic acid and salts thereof), dispersants, surfactants, stabilizers, scale inhibitors and anti-corrosion additives.

The microbicidal compositions of the present invention can be used to inhibit the growth of microorganisms by introducing a microbicidally effective amount of the compositions onto, into, or at a locus subject to microbial attack. Suitable loci include, for example: cooling towers; air washers; boilers; mineral slurries; wastewater treatment; ornamental fountains; reverse osmosis filtration; ultrafiltration; ballast water; evaporative condensers; heat exchangers; pulp and paper processing fluids; plastics; emulsions; dispersions; paints; latexes; coatings, such as varnishes; construction products, such as mastics, caulks, and sealants; construction adhesives, such as ceramic adhesives, carpet backing adhesives, and laminating adhesives; industrial or consumer adhesives; photographic chemicals; printing fluids; household products, such as bathroom and kitchen cleaners; cosmetics; toiletries; shampoos; soaps; detergents; industrial cleaners; floor polishes; laundry rinse water; metalworking fluids; conveyor lubricants; hydraulic fluids; leather and leather products; textiles; textile products; wood and wood products, such as plywood, chipboard, flakeboard, laminated beams, oriented strandboard, hardboard, and particleboard; petroleum processing fluids; fuel; oilfield fluids, such as injection water, fracture fluids, and drilling muds; agriculture adjuvant preservation; surfactant preservation; medical devices; diagnostic reagent preservation; food preservation, such as plastic or paper food wrap; pools; and spas.

Preferably, the microbicidal compositions of the present invention are used to inhibit the growth of microorganisms at a locus selected from one or more of emulsions, dispersions, paints, latexes, household products, detergents and industrial cleaners. In particular, the microbicidal compositions are useful in emulsions, dispersions, paints and latexes.

The specific amount of the combinations necessary to inhibit or control the growth of microorganisms in a locus depends upon the particular compounds in the combination and particular locus to be protected. Typically, the amount of the combinations of the present invention to control the growth of microorganisms in a locus is sufficient if it provides from 50 to 20,000 ppm active ingredient of the combinations in the locus. It is preferred that the combination be present in the locus in an amount of at least 100 ppm, more preferably at least 200 ppm, more preferably at least 300 ppm and most preferably at least 500 ppm. It is preferred that the combinations be present in the locus in an amount of no more than 10,000 ppm, more preferably no more than 7,000 ppm, and most preferably no more than 5,000 ppm.

An especially preferred microbicidal composition of this invention contains 15% zinc pyrithione; 6.5% zinc oxide; and 3% 2-N-ethyl-4-N-tert-butyl-6-methylthio-1,3,5-triazine-2,4-diylamine.

## Claims

1. A microbicidal composition comprising:
(a) at least one sulfur-containing s-triazine; and
(b) at least one pyrithione compound.

2. The composition of claim 1 in which said at least one sulfur-containing s-triazine is at least one 2-N-alkyl-4-N-alkyl-6-alkylthio-1,3,5-triazine-2,4-diylamine, and said at least one 2-N-alkyl-4-N-alkyl-6-alkylthio-1,3,5-triazine-2,4-diylamine is present in a total amount from 1.5% to 10%.

3. The composition of claim 2 in which said at least one pyrithione compound is at least one pyrithione metal salt, and said at least one pyrithione metal salt is present in a total amount from 5% to 25%.

4. The composition of claim 3 further comprising zinc oxide in an amount from 2% to 12%.

5. The composition of claim 4 in which said at least one 2-N-alkyl-4-N-alkyl-6-alkylthio-1,3,5-triazine-2,4-diylamine is selected from the group consisting of 2-N-cyclopropyl-4-N-tert-butyl-6-methylthio-1,3,5-triazine-2,4-diylamine and 2-N-ethyl-4-N-tert-butyl-6-methylthio-1,3,5-triazine-2,4-diylamine, and said at least one pyrithione metal salt is zinc pyrithione.

6. The composition of claim 5 having no more than 1% halogenated biocides.

7. The composition of claim 6 which is substantially free of methyl-N-benzimidazol-2-yl carbamate.

8. The composition of claim 7 in which said at least one 2-N-alkyl-4-N-alkyl-6-alkylthio-1,3,5-triazine-2,4-diylamine is 2-N-ethyl-4-N-tert-butyl-6-methylthio-1,3,5-triazine-2,4-diylamine.
